# EUROPÄISCHE PATENTSCHRIFT

(11) **EP 3 394 133 B1**
(45) Veröffentlichungstag und Bekanntmachung des Hinweises auf die Patenterteilung: **30.03.2022**
(21) Anmeldenummer: 16812964.1
(22) Anmeldetag: 20.12.2016
(51) Int. Cl.: C08G 18/48, C08G 18/76, C08G 18/28, C08G 18/30, C08G 18/42, C08G 18/12, C09J 175/04

(54) **DICHTSTOFF FÜR BODENFUGEN MIT HOHER BESTÄNDIGKEIT GEGENÜBER KRAFTSTOFFEN**
SEALING MATERIAL FOR GROUND JOINTS WITH HIGH RESISTANCE TO FUELS
MATERIAU D'ETANCHEITE POUR DES JOINTS DE SOLS A FORTE RESISTANCE AUX CARBURANTS

(30) Priorität: 21.12.2015 EP 15201584
(43) Veröffentlichungstag der Anmeldung: 31.10.2018
(73) Patentinhaber: Sika Technology AG, 6340 Baar (CH)
(72) Erfinder: SCHLUMPF, Michael, 8143 Stallikon (CH)
(74) Vertreter: Sika Patent Attorneys
(86) Internationale Anmeldenummer: PCT/EP2016/081846
(87) Internationale Veröffentlichungsnummer: WO 2017/108742

(56) Entgegenhaltungen:
- WO-A1-2012/049287
- JP-A- 2001 019 734
- US-A- 4 390 678
- US-A- 4 812 524

## Beschreibung

### Technisches Gebiet

Die Erfindung betrifft feuchtigkeitshärtende Zusammensetzungen auf Polyurethanbasis, die sich für Klebe- und Abdichtungsanwendungen in der Fertigungsindustrie und im Baugewerbe eignen und die eine hohe Beständigkeit gegenüber Kraftstoffen aufweisen.

### Stand der Technik

Feuchtigkeitshärtende Kleb- und Dichtstoffe auf Polyurethan-Basis werden in der industriellen Fertigung und bei Bauvorhaben seit langem eingesetzt, beispielsweise zum elastischen Verkleben und Abdichten von Fugen. Neben den reaktiven, vernetzbaren Polyurethanpräpolymeren enthalten solche Zusammensetzungen auf Polyurethanbasis normalerweise weitere Stoffe in grösserer Menge. Dazu gehören vor allem auch Weichmacher, die eine gute Verarbeitbarkeit durch Verminderung der Viskosität vor der Aushärtung ermöglichen, sowie beispielsweise die hohe elastische Dehnbarkeit und den tiefen E-Modul der ausgehärteten Zusammensetzungen möglich machen, die für Fugendichtungen wichtig sind. Je nach Anwendung muss jedoch darauf geachtet werden, dass insbesondere mobile Komponenten wie der Weichmacher nicht mit der Zeit aus der ausgehärteten Zusammensetzung in die Umgebung auswandern, zum Beispiel in das Klebesubstrat oder ein umgebendes Milieu, oder durch Wasser ausgewaschen werden. Typische Weichmacher, die in Polyurethanzusammensetzungen verwendet werden, sind relativ beständig gegen solche Auswanderungen und Auswaschungen, da sie gut mit der Polyurethanmatrix verträglich sind und sich schlecht in Wasser oder typischen Substraten lösen. Für gewisse Anwendungen hingegen reichen die herkömmlichen Zusammensetzungen nicht aus. Abdichtungen und Fugen von Kraftstofftanks oder -leitungen, für Auffangbehälter sowie Betonabdichtungen an Tankstellen und Flugfeldern beispielsweise sind teilweise in ständigem Kontakt mit Kraftstoffen wie Benzin und Kerosin, und solche Milieus stellen Polyurethanzusammensetzungen vor grosse Herausforderungen. Die herkömmlichen, wasserunlöslichen Weichmacher werden rasch von den Kraftstoffen ausgewaschen, was zu einer starken Versprödung oder Schrumpfung des Kleb- und Dichtstoffes führt sobald der Kraftstoff verdunstet ist. Andererseits quellen die herkömmlichen Polyurethanzusammensetzungen unter starker Kraftstoffeinwirkung stark und meist irreversibel auf, was zu mechanischen und ästhetischen Problemen führt. Zwar sind kraftstoffresistente Weichmacher für Kunststoffe bekannt. Allerdings eignen sich diese meist nicht für Polyurethanzusammensetzungen, da sie mit den typischerweise eingesetzten Polyurethanpräpolymeren und anderen Bestandteilen nicht kompatibel sind und dadurch zu Weichmacherausschwitzungen führen und mangelhafte mechanische Eigenschaften aufweisen oder gar nicht erst formuliert werden können. Die bisher für kraftstoffbeständige Polyurethanzusammensetzungen eingesetzten Zusatzstoffe zur Erzielung einer guten Kraftstoffbeständigkeit sind meist hochgiftige Asphalt- oder Teerölsubstanzen wie beispielsweise in US 3,179,6510 A beschrieben. Andere für solche kraftstoffbeständigen Dichtungen eingesetzte Zusammensetzungen wie beispielsweise Silikone weisen wiederum Nachteile gegenüber Polyurethanen auf, wie deutlich höhere Kosten, vergleichsweise schlechtere Haftungen, beispielsweise auf Beton, ein kleineres Spektrum an mechanischer Performance oder mangelnde Überstreichbarkeit. Daher besteht nach wie vor ein Bedürfnis nach Polyurethanzusammensetzungen, die frei von giftigen Asphalt- und Teerölen sind, als elastische Kleb- und Dichtstoffe eigesetzt werden können und unter Kraftstoffeinwirkung keine signifikante Weichmacherauswanderung oder -auswaschung aufweisen, nicht spröde werden, schrumpfen oder irreversibel aufquellen. Dichtmassen, die Sulfonamide als Weichmacher enthalten, werden in JP 2001 019734 A, US 4,390,678 A und US 4,812,524 A beschrieben ohne jedoch auf deren Kraftstoffbeständigkeit einzugehen. WO 2012/049287 A1 offenbart Vergussmassen auf Basis von Polyurethanen, die Sulfonamide als Weichmacher enthalten und hebt unter anderem die Kraftstoffbeständigkeit der Vergussmassen hervor; deren Eignung als Dichtmittel wird in WO 2012/049287 A1 nicht beschrieben.

### Darstellung der Erfindung

Aufgabe der vorliegenden Erfindung ist es daher, einen kraftstoffbeständigen Polyurethankleb- oder -dichtstoff bereitzustellen, der unter Einfluss von Kraftstoffen keinen wesentlichen Weichmacherverlust erleidet und nach Aushärtung unter Kraftstoffeinfluss in bevorzugten Ausführungsformen weder irreversibel aufquillt noch schrumpft oder Versprödungen zeigt.

Überraschenderweise wurde nun gefunden, dass Zusammensetzungen gemäss Anspruch 1 diese Aufgabe lösen. Die Verwendung von Sulfonamidweichmachern in Polyurethanzuammensetzungen gemäss Anspruch 1 führt zu einer unerwartet hohen Beständigkeit gegenüber Kraftstoffen, die mit einer überraschend guten Verträglichkeit und mit sehr geringen Auswanderung oder Auswaschung dieser Weichmacher aus der Polyurethanzusammensetzung einhergeht. Falls eine Aufnahme von Kraftstoff in erfindungsgemässe Zusammensetzungen stattfindet, ist diese weitgehend reversibel und beeinträchtigt die Funktion der ausgehärteten Polyurethanzusammensetzung nicht. In bevorzugten Ausführungsformen sind die ausgehärteten erfindungsgemässen Polyurethanzusammensetzungen auch unter längerer Kraftstoffeinwirkung formstabil und quellen gar nicht oder nur unwesentlich und verlieren keine wesentlichen Mengen an Weichmachern durch Auswaschung. In anderen bevorzugten Ausführungsformen findet eine Quellung unter starker Kraftstoffeinwirkung zwar statt, allerdings ebenfalls ohne wesentliche Weichmacherauswaschung und weitgehend reversibel. Dieser Effekt führt zu einer temporären Verstärkung des Abdichtungsdrucks bei der reversiblen Quellung, was beispielsweise bei Fugendichtungen in Auffangbecken für grosse Mengen auslaufenden Kraftstoffs äusserst vorteilhaft sein kann.

Die erfindungsgemässe Polyurethanzusammensetzung weist gute Applikationseigenschaften auf und bildet nach Aushärtung ein elastisches Material von hoher Festigkeit und Beständigkeit.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Polyurethanzusammensetzung, umfassend
a) 5 bis 40 Gew.-%, bezogen auf die gesamte Polyurethanzusammensetzung, mindestens eines Polyols **P;**
b) 25 bis 75 Gew.-%, bezogen auf die gesamte Polyurethanzusammensetzung, mindestens eines Füllstoffs **F;**
c) 0.5 bis 10 Gew.-%, bezogen auf die gesamte Polyurethanzusammensetzung, mindestens eines Polyisocyanats **I;**
d) 10 bis 40 Gew.-%, bezogen auf die gesamte Polyurethanzusammensetzung, mindestens eines Weichmachers **W;**
dadurch gekennzeichnet, dass der Weichmacher **W** mindestens ein Sulfonamid umfasst.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23 °C bezeichnet. Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt. Als "Kraftstoffe" im Sinne des vorliegenden Dokuments werden bei Raumtemperatur (23 °C) und 1 bar Druck flüssig vorliegende Gemische oder Reinsubstanzen verstanden, die vorwiegend aus linearen, verzweigten und/oder aromatischen Kohlenwasserstoffen mit typischerweise ungefähr 5 bis ungefähr 25 Kohlenstoffatomen bestehen. Darunter fallen beispielsweise Benzin (Ottokraftstoff), Dieselöl, Kerosin, Leichtbenzin, Petroleum oder Schweröl.

Die erfindungsgemässe Polyurethanzusammensetzung enthält mindestens ein Polyol **P.**

Geeignete Polyole **P** sind insbesondere Polyetherpolyole, Styrol-Acrylnitrilgepfropfte Polyetherpolyole, Polyesterpolyole, Polycarbonatpolyole, Poly(meth)acrylatpolyole, polyhydroxyfunktionelle Fette und Öle oder Polykohlenwasserstoffpolyole sowie Mischungen dieser Polyole. Bevorzugt werden Polyetherpoloyole und Polyesterpolyole verwendet. Am meisten bevorzugt sind Polyesterpolyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butadien oder Diengemischen und Vinylmonomeren wie Styrol, Acrylnitril oder Isobutylen, oder polyhydroxyfunktionelle Polybutadienpolyole, beispielsweise solche, die durch Oxidation von Polybutadien oder Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 20'000 g/mol, und eine mittlere OH-Funktionalität im Bereich von 1.6 bis 3 auf.

In einer bevorzugten Ausführungsform der erfindungsgemässen Polyurethanzusammensetzung umfasst das Polyol **P** mindestens ein Polyetherpolyol, bevorzugt besteht es aus mindestens einem Polyetherpolyol. Diese Ausführungsform neigt zwar unter Kraftstoffeinfluss zum Quellen der ausgehärteten Zusammensetzung, beispielsweise in einer Bodenfuge. Damit vergrössert sich das räumliche Volumen der Zusammensetzung, da signifikante Mengen an Kraftstoff in die Zusammensetzung einwandern. Allerdings ist dieses Aufquellen reversibel. Sobald kein Kraftstoffkontakt mehr besteht, vermindert sich die Quellung durch Auswandern und Verdunsten des Kraftstoffes wieder, während keine oder nur unwesentliche Teile anderer Bestandteile, wie zum Beispiel Weichmacher **W,** ausgetragen oder ausgewaschen werden. Zum Beispiel sind solche Ausführungsformen dadurch besonders geeignet für die Abdichtung von Auffangbecken in Raffinerien oder Tankstellen, wo grossen Mengen an Kraftstoffen bei einem Unfall auslaufen können. Der erhöhte Druck, der durch das Quellen einer erfindungsgemässen Fugendichtung erzeugt wird, kann die Abdichtung des Auffangbeckens temporär wesentlich verbessern, was besonders wichtig ist, wenn grosse Mengen Kraftstoff auf die Dichtung drücken. Nach Entfernen des Kraftstoffs aus dem Becken schrumpft die Dichtung dann rasch, beispielsweise innerhalb einiger Stunden, wieder auf ihre im Wesentlichen ursprüngliche Form, ohne dass signifikante Anteile von Weichmacher ausgewaschen worden sind und dadurch ein Ersetzen der Dichtung nötig wird.

In einer anderen, besonders bevorzugten Ausführungsform der erfindungsgemässen Polyurethanzusammensetzung umfasst das Polyol **P** mindestens ein Polyesterpolyol, bevorzugt besteht es aus mindestens einem Polyesterpolyol. Der Vorteil dieser Ausführungsform ist, dass nur unwesentliche Mengen an Kraftstoff in die ausgehärtete Zusammensetzung einwandern und gleichzeitig auch keine oder nur unwesentliche Mengen an Bestandteilen der Zusammensetzung, wie beispielsweise Weichmacher **W,** aus der Zusammensetzung auswandern oder ausgewaschen werden. Dadurch ist diese Ausführungsform ganz besonders beständig und formbeständig unter Kraftstoffeinfluss, was eine Anwendung beispielsweise als Bodenfugen bei Tankstellen und Flugplätzen oder in Garagen oder Fahrzeugwerkstätten besonders vorteilhaft macht.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Das mindestens eine Polyol **P** ist in der erfindungsgemässen Zusammensetzung enthalten mit einer Menge von 5 bis 40 Gew.-%, bevorzugt 10 bis 30 Gew.-%, bezogen auf die gesamte Zusammensetzung.

Weiterhin enthält die erfindungsgemässe Polyurethanzusammensetzung mindestens ein Polyisocyanat **I.**

Als Polyisocyanate **I** für die Herstellung des Polyurethanpolymers in der erfindungsgemässen Zusammensetzung können handelsübliche Polyisocyanate, insbesondere Diisocyanate, verwendet werden.

Geeignete Polyisocyanate **I** sind aromatische Di- oder Triisocyanate, insbesondere 4,4'- oder 2,4'- oder 2,2'-Diphenylmethandiisocyanat oder beliebige Gemische dieser Isomeren (MDI), 2,4- oder 2,6-Toluylendiisocyanat oder beliebige Gemische dieser Isomeren (TDI), Gemische aus MDI und MDI-Homologen (polymeres MDI (PMDI)), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris-(4-isocyanatophenyl)methan oder Tris-(4-isocyanatophenyl)thiophosphat. Weitere geeignete Polyisocyanate **I** sind aliphatische, cycloaliphatische oder arylaliphatische Di- oder Triisocyanate, insbesondere 1,4-Tetramethylendiisocyanat, 2-Methylpentamethylen-1,5-diisocyanat, 1,6-Hexamethylendiisocyanat (HDI), 2,2,4- und/oder 2,4,4-Trimethyl-1,6-hexamethylendiisocyanat (TMDI), 1,10-Decamethylendiisocyanat, 1,12-Dodecamethylendiisocyanat, Lysin- oder Lysinesterdiisocyanat, Cyclohexan-1,3- oder -1,4-diisocyanat, 1-Methyl-2,4- und/oder -2,6-diisocyanatocyclohexan (H₆TDI), 1-Isocyanato-3,3,5-trimethyl-5-isocyanatomethylcyclohexan (IPDI), Perhydro-2,4'- und/oder -4,4'-diphenylmethandiisocyanat (H₁₂MDI), 1,3- oder 1,4-Bis-(isocyanatomethyl)cyclohexan, m- oder p-Xylylendiisocyanat, Tetramethyl-1,3-oder -1,4-xylylendiisocyanat, 1,3,5-Tris-(isocyanatomethyl)benzol, Bis-(1-Isocyanato-1-methylethyl)naphthalin, Dimer- oder Trimerfettsäureisocyanate wie insbesondere 3,6-Bis-(9-isocyanatononyl)-4,5-di(1-heptenyl)cyclohexen (Dimeryldiisocyanat).

Weitere geeignete Polyisocyanate **I** sind Oligomere oder Derivate der genannten Di- oder Triisocyanate, insbesondere abgeleitet von MDI oder TDI oder HDI oder IPDI, insbesondere Oligomere enthaltend Uretdion- oder Isocyanurat-oder Iminooxadiazindion-Gruppen oder verschiedene dieser Gruppen; oder zwei- oder mehrwertige Derivate enthaltend Ester- oder Harnstoff- oder Urethan- oder Biuret- oder Allophanat- oder Carbodiimid- oder Uretonimin- oder Oxadiazintrion-Gruppen oder verschiedene dieser Gruppen. Solche Polyisocyanate stellen in der Praxis üblicherweise Gemische von Substanzen mit unterschiedlichen Oligomerisierungsgraden und/oder chemischen Strukturen dar. Insbesondere weisen sie eine mittlere NCO-Funktionalität von 2.1 bis 4.0 auf.

Das Polyisocyanat **I** kann anteilig auch Isocyanatgruppen aufweisende Polyurethanpolymere erhalten aus der Umsetzung von Polyolen, insbesondere Polyolen **P,** mit Diisocyanaten, wie nachfolgend beschrieben, enthalten.

Als Polyisocyanat **I** bevorzugt sind aromatische Polyisocyanate, insbesondere monomeres oder oligomeres oder polymeres MDI oder TDI.

In der erfindungsgemässen Zusammensetzung ist Polyisocyanat **I** in einer Menge von 0.5 Gew.-% bis 10 Gew.-%, insbesondere in einer Menge von 0.7 Gew.-% bis 5 Gew.-%, besonders bevorzugt 1 Gew.-% bis 3 Gew.-%, bezogen auf die gesamte Zusammensetzung, vorhanden.

Das Polyol **P** und das Polyisocyanat **I** der erfindungsgemässen Zusammensetzung reagieren zu einem Polyurethanpolymer. Je nach Anwendungsform kann ein solches Polyurethanpolymer bereits vorreagiert vorliegen. Dies ist insbesondere in einkomponentigen Ausführungsformen der Fall, wo eine anwendungsfertig gemischte Zusammensetzung ohne weitere Mischvorgänge direkt aus dem Gebinde appliziert werden kann. In diesem Fall liegen in der Mischung Isocyanatgruppen aufweisende Polyurethanpolymere vor. Dies bedeutet, dass die Polyurethanpolymere zumindest vorwiegend Isocyanatgruppen an ihren Kettenenden aufweisen, die während und nach Applikation mit Feuchtigkeit reagieren und mit anderen Isocyanatgruppen unter Bildung von Harnstoffgruppen vernetzen. Für solche Ausführungsformen ist es vorteilhaft, wenn Polyol **P** und Polyisocyanat **I** vorgängig unter kontrollierten Bedingungen zu Isocyanatgruppen aufweisenden Polyurethanpolymeren umgesetzt werden, die dann als solche in die Zusammensetzungen eingebracht werden. Diese Umsetzung kann dadurch erfolgen, dass das Polyol **P** und das Polyisocyanat **I** mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat **I** so dosiert ist, dass dessen Isocyanatgruppen im Verhältnis zu den Hydroxylgruppen des Polyols **P** im stöchiometrischen Überschuss vorhanden sind. Insbesondere wird der Überschuss an Polyisocyanat **I** so gewählt, dass im resultierenden Polyurethanpolymer nach der Umsetzung aller Hydroxylgruppen des Polyols **P** ein Gehalt an freien Isocyanatgruppen von 0.1 bis 5 Gew.-%, bevorzugt 0.2 bis 3 Gew.-%, besonders bevorzugt 0.3 bis 2.5 Gew.-%, bezogen auf das gesamte Polymer, verbleibt. Gegebenenfalls kann das Isoscyanatgruppen aufweisende Polyurethanpolymer unter Mitverwendung von Weichmachern **W** hergestellt werden.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.3:1 bis 4:1, insbesondere 1.5:1 bis 3:1 und besonders bevorzugt 1.7:1 bis 2.5:1 erhalten werden.

Weiterhin enthält die erfindungsgemässe Polyurethanzusammensetzung mindestens einen Weichmacher **W.** Dabei handelt es sich meist um ein Gemisch verschiedener Substanzen. Dieser Weichmacher **W** umfasst mindestens ein Sulfonamid gemäss Formel (I).

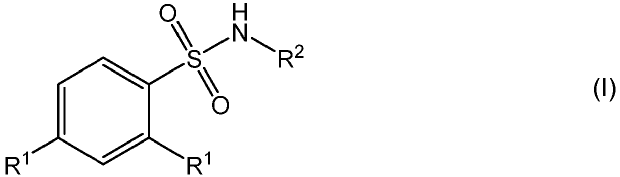

Darin stehen die Reste R¹ unabhängig voneinander für ein Wasserstoffatom oder eine Methylgruppe und der Rest R² für einen linearen oder verzweigten Alkylrest mit 1 bis 12 C-Atomen, der optional Ethersauerstoff enthalten kann, bevorzugt einen Butylrest.

Bevorzugte Sulfonamidweichmacher sind N-alkylierte para-Toluolsulfonamide, N-alkylierte ortho-Toluolsulfonamide und N-alkylierte Benzolsulfonamide. Besonders bevorzugt ist N-Butylbenzolsulfonamid. Dieses ist beispielsweise erhälich unter dem Handelsnamen Proviplast 024 von der Firma Proviron, Niederlande oder unter dem Handelsnamen Uniplex 214 von der Firma Lanxess, Deutschland.

Solche Sulfonamidweichmacher kommen oft in sogenannt technischen Reinheitsgraden in den Handel und können synthesebedingt verschiedene chemische Substanzen enthalten. So ist es zum Beispiel durchaus möglich, dass Gemische mit beispielsweise verschiedenen Resten R² gemäss Formel (I) im Sulfonamidweichmacher vorliegen. Dies ist jedoch für die erfindungsgemässe Anwendung nicht erheblich.

Der Weichmacher **W** kann nur aus einem oder mehreren Sulfonamiden gemäss Formel (I) bestehen, oder es können zusätzlich weitere Weichmacher eingesetzt werden.

Als zusätzliche Weichmacher geeignet sind insbesondere Ester organischer Carbonsäuren, insbesondere Phthalate wie Diisononylphthalat oder Diisodecylphthalat, hydrierte Phthalate wie Diisononyl-1,2-cyclohexan-dicarboxylat, Adipate wie Dioctyladipat, Azelate und Sebacate, oder Ester organischer Phosphor- und Sulfonsäuren, oder Kohlenwasserstoffe wie Polybutene oder Polyisobutene. Als zusätzliche Weichmacher bevorzugt sind Phthalate, hydrierte Phthalate oder Adipate. Am meisten bevorzugt sind Diisononylphthalat, Diisodecylphthalat oder Diisononyl-1,2-cyclohexandicarboxylat.

In einer besonders bevorzugten Ausführungsform der erfindungsgemässen Polyurethanzusammensetzung umfasst der Weichmacher **W** N-Butylbenzolsulfonamid oder besteht aus N-Butylbenzolsulfonamid.

Der Gehalt an Weichmacher **W** in der Zusammensetzung liegt im Bereich von 10 Gew.-% bis 40 Gew.-%, insbesondere 12.5 Gew.-% bis 35 Gew.-%, besonders bevorzugt 15 Gew.-% bis 30 Gew.-%, bezogen auf die gesamte Zusammensetzung.

Es ist sehr vorteilhaft, wenn bei Mischungen verschiedener Weichmacher der Gehalt an Sulfonamid in Weichmacher **W** den grössten Teil ausmacht. Bevorzugt besteht Weichmacher **W** aus mehr als 50 Gew.-% Sulfonamid, bevorzugt mehr als 75 Gew.-%, besonders bevorzugt mehr als 90 Gew.-% Sulfonamid, bezogen auf den gesamten Weichmacher **W.** Ein höherer Anteil an Sulfonamid hat typischerweise eine höhere Kraftstoffbeständigkeit zu Folge. Auf der anderen Seite kann es aber beispielsweise aus Gründen der mechanischen Eigenschaften oder der Verarbeitbarkeit, sowie aus ökonomischen Überlegungen, vorteilhaft sein, kleine Anteile anderer Weichmacher beizufügen.

Die erfindungsgemässe Polyurethanzusammensetzung enthält weiterhin mindestens einen Füllstoff **F.** Als Füllstoff **F** geeignet sind insbesondere natürliche, gemahlene oder gefällte Kreiden (die gänzlich oder vorwiegend aus Calciumcarbonat bestehen), welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver, Zeolithe oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen. Als Füllstoffe besonders bevorzugt sind gemahlene Calciumcarbonate, calcinierte Kaoline oder Russ. Am meisten bevorzugt sind Kombinationen von gemahlenen Calciumcarbonaten oder calcinierten Kaolinen und Russ.

Der Gehalt an Füllstoff F in der Zusammensetzung liegt im Bereich von 25 Gew.-% bis 75 Gew.-%, insbesondere 30 Gew.-% bis 70 Gew.-%, besonders bevorzugt 35 Gew.-% bis 65 Gew.-%, bezogen auf die gesamte Zusammensetzung.

Die erfindungsgemässe Zusammensetzung enthält bevorzugt weiterhin mindestens einen Katalysator für die Vernetzung von Polyurethanen. Dieser Katalysator katalysiert insbesondere die Reaktion von Isocyanatgruppen mit Hydroxylgruppen und/oder Wasser. Als Katalysator geeignet sind basische Stickstoff- oder Phosphorverbindungen wie Imidazole, Pyridine, Phosphazen-Basen oder insbesondere Amine, Hexahydrotriazine, Amidine, Guanidine oder Biguanide. Besonders geeignet sind tertiäre Amine, im Falle von einkomponentigen Formulierungen insbesondere solche mit einem pKa-Wert unterhalb von 10. Geeignete Amin-Katalysatoren sind beispielsweise N-Ethyl-diisopropylamin, N,N,N',N'-Tetramethyl-alkylendiamine, 1,4-Diazabicyclo[2.2.2]octan, 2,2'-Dimorpholinodiethylether (DMDEE) sowie Derivate davon mit Substituenten an den Morpholinringen. Besonders bevorzugt sind DMDEE und 1,4-Diazabicyclo[2.2.2]octan.

Weiterhin geeignet als Katalysator sind Metallverbindungen, insbesondere Organozinn(IV)-Verbindungen, Organotitanate oder Organozirkonate. Besonders bevorzugt sind Organozinn(IV)-Verbindungen. Als Organozinn(IV)-Verbindung geeignet sind insbesondere Dialkylzinnoxide, Dialkylzinndichloride, Dialkylzinndicarboxylate und Dialkylzinndiketonate, bevorzugt Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat.

Der Gehalt an Katalysator in der Zusammensetzung liegt bevorzugt im Bereich von 0.001 Gew.-% bis 2 Gew.-%, insbesondere 0.01 Gew.-% bis 1.0 Gew.-%, besonders bevorzugt 0.05 Gew.-% bis 0.5 Gew.-%, bezogen auf die gesamte Zusammensetzung. Für Metallkatalysatoren liegt der bevorzugte Gehalt insbesondere zwischen 0.001 Gew.-% und 0.5 Gew.-%, besonders bevorzugt zwischen 0.005 und 0.25 Gew.-%, bezogen auf die gesamte Zusammensetzung. Für Aminkatalysatoren liegt der bevorzugte Gehalt insbesondere zwischen 0.05 Gew.-% und 2 Gew.-%, besonders bevorzugt zwischen 0.1 und 1 Gew.-%, bezogen auf die gesamte Zusammensetzung.

Weiterhin enthält die erfindungsgemässe Zusammensetzung bevorzugt mindestens einen Silan-Haftvermittler. Dabei handelt es sich um einzelne oder gemischte Organoalkoxysilane, die mindestens einen nicht hydrolisierbaren organischen Rest am Siliciumatom besitzen, wobei dieser Rest bevorzugt Heteroatome enthält, die über freie Elektronenpaare, kovalente, ionische oder andere Mechanismen eine Wechselwirkung mit einem Substrat und damit Haftung auf diesem Substrat aufbauen können. "Nicht hydrolisierbar" bedeutet in diesem Zusammenhang eine Silicium-Kohlenstoffbindung, im Gegensatz zum Beispiel zu einer hydrolisierbaren Slicium-Sauerstoff-Bindung. Im Falle von Siliciumoxid-haltigen Haftuntergründen, wie Gläsern, kann auch die Silangruppe des Organoalkoxysilans über eine Hydrolyse-/Kondensationsreaktion eine kovalente Haftung zum Untergrund ermöglichen, während der organische Rest, z.B. über eine Reaktion einer allfällig vorhandenen Hydroxyl- oder Amingruppe mit einer Isocyanatgruppe eines Polyurethanpolymers, mit der Klebstoffzusammensetzung reagiert.

Als Silan-Haftvermittler geeignet sind Organoalkoxysilane ("Silane"), welche am organischen Rest eine Reaktivgruppe tragen, insbesondere Epoxysilane, Mercaptosilane, (Meth)acrylsilane, Isocyanatosilane, Anhydridosilane, S-(Alkylcarbonyl)-mercaptosilane, Aldiminosilane oder oligomere Formen dieser Silane, oder Addukte von Amino- oder Mercaptosilanen mit Polyisocyanaten. Bevorzugt sind 3-Glycidoxypropyltrimethoxysilan, ß-(3,4-Epoxycyclohexyl)ethyltrimethoxysilan, 3-Mercaptopropyltrimethoxysilan oder 3-Methacryloxypropyltrimethoxysilan. Am meisten bevorzugt ist 3-Glycidoxypropyltrimethoxysilan.

Der Gehalt an Silan-Haftvermittler in der Zusammensetzung liegt bevorzugt im Bereich von 0.01 Gew.-% bis 1.0 Gew.-%, insbesondere 0.05 Gew.-% bis 0.5 Gew.-%, bezogen auf die gesamte Zusammensetzung.

Die erfindungsgemässe Polyurethanzusammensetzung ist insbesondere im Wesentlichen frei von Asphalt, Bitumen oder Teerölen. Dies bedeutet, dass solche Substanzen bevorzugt mit einem Gehalt von weniger als 0.1 Gew.-% enthalten sind, in bevorzugten Fällen überhaupt nicht nachweisbar. Ebenfalls bevorzugt nicht oder nur in unwesentlichen Mengen unter 0.1 Gew.-% bei der Herstellung der erfindungsgemässen Polyurethanzusammensetzung verwendete Zusätze sind aliphatische und vor allem aromatische flüssige Kohlenwasserstoffe wie beispielsweise Extenderöle, sogenannte White Spirits oder Stoddard Solvents, Petroleum und Petrolnaphtha.

Die beschriebene Zusammensetzung umfasst bevorzugt weitere, für Polyurethan-Klebstoffe und Dichtstoffe gebräuchliche Inhaltsstoffe, insbesondere weitere Füllstoffe; Reaktivweichmacher; Rheologie-Additive, wie beispielsweise Verdickungsmittel, zum Beispiel Harnstoffverbindungen der Art, wie sie als Thixotropierungsmittel ("Thixotropy endowing agent") in WO 02/48228 A2 auf den Seiten 9 bis 11 beschrieben sind, Polyamidwachse, Bentonite oder pyrogene Kieselsäuren; Haftvermittlerharze; oberflächenaktive Substanzen wie beispielsweise Netzmittel, Verlaufsmittel, Entlüftungsmittel oder Entschäumer; Trocknungsmittel wie beispielsweise p-Tosylisocyanat und andere reaktive Isocyanate, Calciumoxid, oder Molekularsiebe; Stabilisatoren gegen Wärme, Licht, UV-Licht und Oxidation; flammhemmende Zusätze; Biozide wie beispielsweise Algizide oder Fungizide; sowie weitere solche gängige Zusätze, wie zum Beispiel Fasern, beispielsweise aus Polyethylen; Farbstoffe, Pigmente, oder andere dem Fachmann bekannte Zusatzstoffe.

In zweikomponentigen Ausführungsformen der vorliegenden Erfindung werden einige der verwendeten Bestandteile der erfindungsgemässen Zusammensetzung in gesonderten Komponenten eingesetzt, welche getrennt voneinander gelagert und erst kurz vor oder während der Applikation der Zusammensetzung gemischt werden. Durch diese Vorgehensweise können die miteinander reaktiven Bestandteile getrennt aufbewahrt werden, was für die Lagerstabilität der Zusammensetzung vorteilhaft ist. Auch können sehr reaktive Bestandteile, beispielsweise sehr reaktive Polyisocyanate I, verwendet werden, was eine raschere Aushärtung der Zusammensetzung ermöglicht. Darüber hinaus sind solche Ausführungsformen nicht auf Feuchtigkeit für die Durchhärtung angewiesen, was schnellere Prozesse ermöglicht, die weniger durch klimatische Schwankungen, wie zum Beispiel Luftfeuchtigkeit, beeinflusst werden. Es kann vorteilhaft sein, wenn kein wesentlicher Überschuss an Polyisocyanat **I** vorliegt, um eine übermässige Nachvernetzung durch überschüssige Isocyanatgruppen zu vermeiden, da solche Nachvernetzungsreaktionen typischerweise zu höheren E-Moduln und geringerer Dehnbarkeit führen.

Beim Mischen der beiden Komponenten reagiert das Polyol **P** mit dem Polyisocyanat **I** unter Vernetzung und Aushärtung der Zusammensetzung.

In einer bevorzugten Ausführungsform der erfindungsgemässen Polyurethanzusammensetzung handelt es sich um eine zweikomponentige Zusammensetzung umfassend die Komponenten **KA** und **KB,** wobei die erste Komponente **KA** das mindestens eine Polyol **P** umfasst und die zweite Komponente **KB** das mindestens eine Polyisocyanat **I** umfasst.

Eine bevorzugte Ausführungsform einer zweikomponentigen Polyurethanzusammensetzung nach der vorliegenden Erfindung umfasst:
- eine erste Komponente **KA,** umfassend
   a) 10 bis 50 Gew.-%, bezogen auf **KA,** des mindestens einen Polyols **P;**
   b) 10 bis 50 Gew.-%, bezogen auf **KA,** des mindestens einen Weichmachers **W;**
   c) 25 bis 75 Gew.-%, bezogen auf **KA,** des mindestens einen Füllstoffs **F;**
   d) 0 bis 2 Gew.-%, bevorzugt 0.01 bis 1 Gew.-%, bezogen auf **KA,** mindestens eines Katalysators für die Vernetzung von Polyurethanen; sowie
- eine zweite Komponente **KB,** umfassend
   e) 10 bis 100 Gew.-%, bezogen auf **KB,** des mindestens einen Polyisocyanats **I;**
   f) 0 bis 60 Gew.-%, bezogen auf **KB,** des mindestens einen Weichmachers **W;**
   g) 0 bis 60 Gew.-%, bezogen auf **KB,** des mindestens einen Füllstoffs **F;**
   wobei das Massenmischverhältnis der beiden Komponenten **KA:KB** bevorzugt zwischen 8:1 und 12:1 liegt.

Das für einzelne Ausführungsformen geeignete Massenmischverhältnis der beiden Komponenten **KA** und **KB** hängt natürlich von den verwendeten Mengen von Polyol **P** in **KA** und Polyisocyanat **I** in **KB** ab. Das geeignete Mischverhältnis wird mit Vorteil so berechnet, dass ein leichter molarer Überschuss von beispielsweise 10 mol% an Isocyanatgruppen von Polyisocyanat **I** bezüglich Hydroxylgruppen von Polyol **P** in der gesamten Zusammensetzung nach Mischung vorliegt. Der Fachmann auf dem Gebiet der zweikomponentigen Polyurethanzusammensetzungen ist in der Lage, ein für seine Anwendung geeignetes Massenmischverhältnis zu berechnen.

Eine derartige Zusammensetzung eignet sich zum Beispiel als kraftstoffbeständiger Dichtstoff, beispielsweise für Bodenfugen an Beton bei Tankstellen oder dem Taxi-und Wartungsbereich von Flugplätzen.

Beide Komponenten **KA** und **KB** können neben den bereits erwähnten weitere Bestandteile, wie sie der Fachmann aus der Zweikomponenten-Polyurethanchemie her kennt, aufweisen. Beispiele solcher weiterer Bestandteile sind weiter oben beschrieben. Diese können in nur einer der Komponenten oder in beiden vorhanden sein.

Wie der Fachmann für Polyurethanklebstoffe weiss, muss bei der Herstellung der Komponenten, insbesondere bei der Polyisocyanat enthaltenden Komponente **KB** darauf geachtet werden, dass die Rohstoffe möglichst frei von Wasser sind und dass während und nach deren Herstellung möglichst keine Feuchtigkeit in Kontakt mit der Komponente treten kann. Dies wird einerseits durch ein physikalisches oder chemisches Trocknen der Ausgangssubstanzen sowie durch das Arbeiten unter Inertgas, üblicherweise Stickstoff oder Trockenluft, erreicht.

Die Komponenten **KA** und **KB** werden vor der Anwendung getrennt voneinander gelagert und erst bei oder unmittelbar vor der Anwendung miteinander gemischt. Die Komponenten sind vorteilhaft in einer Verpackung, welche aus zwei voneinander getrennten Kammern besteht, vorhanden und zwar derart, dass die Polyolkomponente **KA** in der einen Kammer und die Polyisocyanatkomponente **KB** in der anderen Kammer vorhanden ist. Die Komponenten **KA** und **KB** werden in die Kammern der Verpackung eingefüllt und luft- und feuchtigkeitsdicht verschlossen.

Bevorzugte derartige Packung sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für grössere Anwendungen, insbesondere für Anwendungen in der industriellen Fertigung, werden die Komponenten **KA** und **KB** vorteilhaft in Fässer oder Hobbocks abgefüllt und gelagert. In diesem Falle werden die Komponenten über hydraulische Pressen, insbesondere über Folgeplatten, ausgepresst und über Leitungen einer Mischapparatur, wie sie üblich für Zweikomponentenklebstoffe in der industriellen Fertigung üblich eingesetzt werden, zugeführt. Bei jeglicher Packung ist es wichtig, dass zumindest die Polyisocyanatkomponente **KB** luft- und feuchtigkeitsdicht verschlossen ist, so dass beide Komponenten über lange Zeit, d.h. typischerweise länger als 6 Monate, lagerfähig sind

Ein bevorzugtes Verfahren zur Verklebung von Substraten mittels einer erfindungsgemässen zweikomponentigen Zusammensetzung umfasst bevorzugt die folgenden Schritte:
- Mischen der vorgängig beschriebenen Komponenten **KA** und **KB;**
- Applizieren der gemischten Polyurethanzusammensetzung auf mindes tens einer der zu verklebenden Substratoberflächen, wobei mindestens eine der zu verklebenden Substratoberflächen bevorzugt vorgängig mit einem Haftvermittler oder Primer behandelt worden ist;
- Fügen innerhalb der Offenzeit, falls Substrate beweglich sind;
- Aushärten der Polyurethanzusammensetzung.

Das Mischen erfolgt typischerweise über Statikmischer oder mit Hilfe von dynamischen Mischern. Beim Mischen ist darauf zu achten, dass die zwei Komponenten möglichst homogen gemischt werden. Werden die zwei Komponenten schlecht gemischt, treten lokale Abweichungen von dem optimalen Mischungsverhältnis, d.h. im Wesentlichen stöchiometrisch, auf, was sich in einer Verschlechterung der mechanischen Eigenschaften der ausgehärteten Polyurethanzusammensetzung auswirkt. Um die Mischqualität auch visuell zu beurteilen, ist es von Vorteil, wenn die zwei Komponenten **KA** und **KB** zwei verschiedene Farben aufweisen, die untereinander, aber auch von der Mischung, visuell gut voneinander unterschieden werden können. Ein Beispiel für eine derartige Farbkombination liegt vor, wenn die eine Komponente schwarz und die andere weiss ist. Eine gute Mischung liegt, dann vor, wenn eine homogene graue Farbe vorliegt und keinerlei Streifen oder Muster in Hell- oder Dunkelgrau oder weiss oder schwarz vorliegen.

Die gemischte Polyurethanzusammensetzung wird auf mindestens einer der zu verklebenden oder abzudichtenden Substratoberfläche appliziert. Das zu verklebende oder abzudichtende Substrat ist vorzugsweise Beton, Metall, ein Kunststoff, ein Glas oder eine Keramik. Typischerweise sind zwei Substrate vorhanden, welche verklebt oder abgedichtet werden sollen. Es ist möglich, dass der Fügepartner, d.h. das zweite Substrat, identisch oder unterschiedlich vom ersten Substrat ist. Insbesondere kann eine solche erfindungsgemässe Zusammensetzung als Anschlussfuge oder Bodenfuge für Beton verwendet werden. Anschliessend an das Fügen erfolgt die Aushärtung der Polyurethanzusammensetzung.

Somit entsteht ein Verbund der Fügepartner, wobei der Kleb- und Dichtstoff diese Fügepartner kraftschlüssig miteinander verbindet. Dabei ist die ausgehärtete erfindungsgemässe Zusammensetzung in der Lage, Bewegungen des Substrates, beispielsweise aus thermischer Ausdehnung, durch elastische Dehnung mindestens teilweise zu kompensieren, ohne dass die Fuge reisst oder sich ablöst.

In einer anderen bevorzugten Ausführungsform der erfindungsgemässen Polyurethanzusammensetzung handelt es sich um eine einkomponentige Zusammensetzung, die also nur eine einzelne Komponente umfasst. Diese Ausführungsform hat den Vorteil, dass die Anwendung besonders einfach und anwenderfreundlich ist, da auf einen Mischprozess bei der Applikation verzichtet werden kann.

Eine bevorzugte Ausführungsform einer einkomponentigen Polyurethanzusammensetzung nach der vorliegenden Erfindung umfasst:
a) 5.5 bis 50 Gew.-%, bezogen auf die gesamte Zusammensetzung, mindestens eines isocyanatfunktionellen Polyurethanpolymers **PR,** hergestellt aus dem mindestens einen Polyol **P** und dem mindestens einen Polyisocyanat **I;**
b) 10 bis 40 Gew.-%, bezogen auf die gesamte Zusammensetzung, des mindestens einen Weichmachers **W;**
c) 25 bis 75 Gew.-%, bezogen auf die gesamte Polyurethanzusammensetzung, des mindestens einen Füllstoffs **F;** sowie
d) 0 bis 2 Gew.-%, bevorzugt 0.01 bis 1 Gew.-%, bezogen auf die gesamte Polyurethanzusammensetzung, mindestens eines Katalysators für die Vernetzung von Polyurethanen.

Eine derartige Zusammensetzung eignet sich zum Beispiel als kraftstoffbeständiger Dichtstoff, beispielsweise für die Verfugung von Kraftstofftanks, -leitungen oder Auffangbehälter, oder für Bodenfugen an Beton bei Tankstellen oder dem Taxi- und Wartungsbereich von Flugplätzen.

Die erfindungsgemässe einkomponentige Zusammensetzung kann neben den bereits erwähnten weitere Bestandteile, wie sie der Fachmann aus der Einkomponenten-Polyurethanchemie her kennt, aufweisen. Beispiele solcher weiterer Bestandteile sind weiter oben beschrieben.

Wie der Fachmann für Polyurethanklebstoffe weiss, muss bei der Herstellung der erfindungsgemässen einkomponentigen Zusammensetzung darauf geachtet werden, dass die Rohstoffe möglichst frei von Wasser sind und dass während und nach deren Herstellung möglichst keine Feuchtigkeit in Kontakt mit der Zusammensetzung treten kann. Dies wird einerseits durch ein physikalisches oder chemisches Trocknen der Ausgangssubstanzen sowie durch das Arbeiten unter Inertgas, üblicherweise Stickstoff oder Trockenluft, erreicht.

Die erfindungsgemässe einkomponentige Zusammensetzung wird nach der Herstellung in eine geeignete Verpackung eingefüllt und luft- und feuchtigkeitsdicht verschlossen.

Bevorzugte derartige Packung sind einerseits Kartuschen, beispielsweise aus weitgehend luftundurchlässigen Kunststoffen, beschichteten Kunststoffen oder Aluminium gefertigt. Derartige Packungen werden insbesondere für Kleinanwendungen bevorzugt, insbesondere für Füllmengen bis 1 Liter.

Für grössere Anwendungen, insbesondere für Anwendungen in der industriellen Fertigung, wird die erfindungsgemässe einkomponentige Zusammensetzung vorteilhaft in Beutel, Fässer oder Hobbocks abgefüllt und gelagert.

Bei jeglicher Packung ist es wichtig, dass die einkomponentige Zusammensetzung luft- und feuchtigkeitsdicht verschlossen ist, so dass sie über lange Zeit, d.h. typischerweise länger als 6 Monate, lagerfähig ist.

Ein bevorzugtes Verfahren zur Verklebung von Substraten mittels einer erfindungsgemässen einkomponentigen Zusammensetzung umfasst bevorzugt die folgenden Schritte:
- Applizieren der einkomponentigen Polyurethanzusammensetzung auf mindestens einer der zu verklebenden Substratoberflächen, wobei mindestens eine der zu verklebenden Substratoberflächen bevorzugt vor gängig mit einem Haftvermittler oder Primer behandelt worden ist;
- Fügen innerhalb der Offenzeit, falls Substrate beweglich sind;
- Aushärten der Polyurethanzusammensetzung.

Die erfindungsgemässe einkomponentige Polyurethanzusammensetzung wird auf mindestens einer der zu verklebenden oder abzudichtenden Substratoberflächen appliziert. Das zu verklebende oder abzudichtende Substrat ist vorzugsweise Beton, Asphalt, Metall, ein Kunststoff, ein Glas oder eine Keramik. Typischerweise sind zwei Substrate vorhanden, welche verklebt oder abgedichtet werden sollen. Es ist möglich, dass der Fügepartner, d.h. das zweite Substrat, identisch oder unterschiedlich vom ersten Substrat ist. Insbesondere kann eine solche erfindungsgemässe Zusammensetzung als Anschlussfuge oder Bodenfuge für Beton verwendet werden. Anschliessend an das Fügen erfolgt die Aushärtung der Polyurethanzusammensetzung.

Somit entsteht ein Verbund der Fügepartner, wobei der Kleb- und Dichtstoff diese Fügepartner kraftschlüssig miteinander verbindet. Dabei ist die ausgehärtete erfindungsgemässe Zusammensetzung in der Lage, Bewegungen des Substrates, beispielsweise aus thermischer Ausdehnung, durch elastische Dehnung mindestens teilweise zu kompensieren, ohne dass die Fuge reisst oder sich ablöst.

Insbesondere im Falle von einkomponentigen Ausführungsformen der vorliegenden Erfindung wird für die Aushärtung Wasser bzw. Feuchtigkeit benötigt. Diese kann aus der Luft stammen (Luftfeuchtigkeit), wobei die Zusammensetzung durch die Diffusion der Feuchtigkeit von aussen nach innen aushärtet. Die Zusammensetzung kann aber auch mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugesetzt werden, zum Beispiel in Form einer wasserhaltigen Paste, die beispielsweise über einen Statikmischer homogen oder heterogen mit der Zusammensetzung vermischt wird.

Die erfindungsgemässe Zusammensetzung besitzt eine lange Haltbarkeit, das heisst, sie ist über längere Zeit lagerstabil. Als "lagerstabil" oder "lagerfähig" wird eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität, der benötigten Auspresskraft bei der Applikation aus dem Gebinde und der Vernetzungsgeschwindigkeit, durch die Lagerung in einem für ihren Gebrauch relevanten Ausmass verändert.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, beispielsweise aus einer Kartusche oder mittels Zahnspachtel aus einem grösseren Gebinde. Eine erfindungsgemässe Zusammensetzung mit guten Applikationseigenschaften weist bevorzugt eine hohe Standfestigkeit und einen kurzen Fadenzug sowie tiefe Viskosität bzw. Auspresskraft auf. Das heisst, sie lässt sich mit dem Zahnspachtel mit wenig Kraft verstreichen bzw. auspressen, bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Die erfindungsgemässe Zusammensetzung wird insbesondere in einem Temperaturbereich zwischen 5°C und 45°C, bevorzugt im Bereich der Raumtemperatur, aufgetragen und härtet auch bei diesen Bedingungen aus. Gegebenenfalls wird sie vor dem Auftragen erwärmt, beispielsweise auf eine Temperatur im Bereich von 20°C bis 100°C, insbesondere 40°C bis 80°C, beispielsweise mit Hilfe eines Kartuschenofens.

Weiterhin umfasst die vorliegende Erfindung die Verwendung einer vorhergehend beschriebenen Zusammensetzung als Kleb- oder Dichtstoff. Bevorzugt ist die Verwendung als Fugendichtstoff. Die erfindungsgemässe Zusammensetzung eignet sich in allen Ausführungsformen insbesondere für die Applikation auf Beton, Mörtel, Backstein, Ziegel, Gips, einem Naturstein wie Granit oder Marmor, Glas, Glaskeramik, Siebdruckkeramik, einem Metall oder einer Metalllegierung, Holz, einem Kunststoff oder einem lackierten Material. Die Ausführungsformen der vorliegenden Erfindung besitzen eine hohe Kraftstoffbeständigkeit.

Weiter betrifft die vorliegende Erfindung die Verwendung einer erfindungsgemässen Polyurethanzusammensetzung zum Verkleben und/oder Abdichten von Beton. Bevorzugt ist die Verwendung zum Verkleben und/oder Abdichten von Beton an einer Garage oder einem Bauwerk einer Tankstelle, eines Tanklagers, eines Kraftstoffbehälters oder eines Flugplatzes. An solchen Orten ist es zu erwarten, dass ein Fugendichtstoff mit Benzin, Kerosin oder anderen Kraftstoffen in Kontakt kommt.

Weiterhin bevorzugt ist die Verwendung als Dichtstoff für Bodenfugen im Tiefbau.

Daneben betrifft die vorliegende Erfindung ein Bauwerk oder Fertigungsgegenstand, insbesondere umfassend Beton, das mit einer erfindungsgemässen Polyurethanzusammensetzung verklebt oder abgedichtet wurde.

Weiterhin ist Gegenstand der vorliegenden Erfindung eine ausgehärtete erfindungsgemässe Polyurethanzusammensetzung. Diese wird erhalten, nachdem die Polyurethanzusammensetzung mit Feuchtigkeit in Kontakt gekommen ist oder, im Falle einer zweikomponentigen Zusammensetzung, nach Mischen der beiden Komponente **KA** und **KB.**

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beschreibung der Messmethoden

Die **Shore A-Härte** wurde bestimmt nach DIN 53505, gemessen nach 14 Tagen Normklima ("NK"; 23 °C, 50% relative Luftfeuchtigkeit) an scheibenförmigen Prüfkörpern mit einem Durchmesser (Kreis) von 42 mm und einer Dicke (Höhe) von 6 mm.

Die **Massenänderung nach Kraftstoffeinwirkung** wurde mit einer Waage gemessen. Für die Tests der Kraftstoffeinwirkung wurden die Shore A Prüfkörper verwendet. Diese wurden jeweils für 24 h in 100 mL eines Testbenzingemischs (70 Volumenprozent Isooctan (2,2,4-Trimethylpentan) und 30 Volumenprozent Toluol) eingelegt, wobei die Prüfkörper von mindestens 6 mm Testbenzin überlagert sein mussten. Nach Entnahme wurden die Prüfkörper kurz mit einem Papiertuch oberflächlich trockengewischt und sofort gewogen. Dieser Wert zeigt die Gewichtszunahme durch Kraftstoffaufnahme. Danach wurden die Prüfkörper während 24 h unter Normklimabedingungen (23 °C, 50% relative Luftfeuchtigkeit) trocknen gelassen und erneut gewogen. Dieser Wert zeigt das Endgewicht nach Verdunsten des aufgenommenen Kraftstoffs und damit den Verlust an Weichmacher durch Auswaschen während der Kraftstofflagerung.

Die **Volumenänderung nach Kraftstoffeinwirkung** wurde mittels einer Schieblehre ebenfalls an den Shore A Prüfkörpern vor und nach Kraftstoffeinwirkung gemessen. Dabei wurden jeweils der Durchmesser und die Dicke der Prüfkörper gemessen.

### Verwendete Rohstoffe

Tabelle 1 zeigt die für die Versuche verwendeten Rohstoffe und ihre Funktion in den Zusammensetzungen.

**Tabelle 1: Verwendete Rohstoffe.**

| *Rohstoff* | *Hersteller*/*Quelle* | *Funktion* |
|---|---|---|
| Desmophen^{®} 1652 | Covestro | Polyol **P** (Polyesterpolyol) |
| Voranol^{®} CP 4755 | Dow Chemical | Polyol **P** (Polyetherpolyol) |
| Proviplast^{®} 024 | Proviron Fine Chemicals | Weichmacher **W** (Sulfonamid) |
| Freeflex^{®} DEPG | Caffaro Industrie S.p.A. | Weichmacher **W** (Benzoat) |
| Disflamoll^{®} DPK | Lanxess | Weichmacher **W** (Phosphat) |
| Jayflex^{®} DIDP | Exxon Mobil | Weichmacher **W** (Phthalat) |
| Omyacarb^{®} 5GU | Omya AG | Füllstoff **F** (Kreide) |
| DABCO^{®} 33LV | Air Products & Chemicals | Katalysator |
| Metatin^{®} 712 | Dow Chemical | Katalysator |
| Desmodur^{®} VK 10 | Covestro | Polyisocyanat **I** |

### Herstellung und Messung der Zusammensetzungen V1, V2 und R1-R8 (zweikomponentig)

Es wurden zwei erfindungsgemässe (V1 und V2) sowie 8 Referenzzusammensetzungen (R1 bis R8) gemäss den in der Tabelle 2 angegebenen Massen (in g) hergestellt.

Dazu wurde für jedes Beispiel zunächst eine Komponente **KA** hergestellt, indem deren jeweilige Inhaltsstoffe (Polyol **P,** Weichmacher **W,** Füllstoff **F** und Katalysator) in einem Vakuummischer zu einer homogenen, lagerfähigen Masse gemischt wurden. Daraufhin wurde die Komponente **KB** (bestehend aus Polyisocyanat **I**) zur Komponente **KA** gegeben und während 20 min bei 1000-1200 Umdrehungen unter Vakuum eingemischt, wobei eine homogene Paste erhalten wurde. Diese wurde dann verwendet, um die Prüfköper herzustellen.

**Tabelle 2: Beispielrezepturen mit Bestandteilen in g. V1 und V2 sind erfindungsgemäss, R1 bis R8 sind nicht erfindungsgemäss.**

| *Bestandteile [g]* | **V1** | **R1** | **R2** | **R3** | **V2** | **R4** | **R5** | **R6** | **R7** | **R8** |
|---|---|---|---|---|---|---|---|---|---|---|
| Komponente **KA:** | | | | | | | | | | |
| Desmophen 1652 | 15 | 15 | 15 | 15 | - | - | - | - | 15 | 15 |
| Voranol CP 4755 | - | - | - | - | 15 | 15 | 15 | 15 | - | - |
| Proviplast 024 | 19.8 | - | - | - | 19.8 | - | - | - | - | - |
| Freeflex DEPG | - | 19.8 | - | - | - | 19.8 | - | - | - | 19.8 |
| Disflamoll DPK | - | - | 19.8 | - | - | - | 19.8 | - | 24.8 | - |
| DIDP | - | - | - | 19.8 | - | - | - | 19.8 | - | - |
| Omyacarb 5GU | 65 | 65 | 65 | 65 | 65 | 65 | 65 | 65 | 60 | 65 |
| DABCO 33LV | 0.2 | 0.2 | 0.2 | 0.2 | 0.2 | 0.2 | 0.2 | 0.2 | 0.2 | 0.2 |

| Komponente **KB:** | | | | | | | | | | |
|---|---|---|---|---|---|---|---|---|---|---|
| Desmodur VK 10 | 2.07 | 2.83 | 2.07 | 2.07 | 1.35 | 2.12 | 1.35 | 1.35 | 2.06 | 2.07 |

Die in Tabelle 2 gezeigten zweikomponentigen Zusammensetzungen zeigen vergleichbare erfindungsgemässe und nicht erfindungsgemässe Beispiele. Da bei den Versuchen R1, R4 und R8 ein Weichmacher **W** mit Hydroxylgruppen verwendet wurde, enthalten R1 und R4 mehr Polyisocyanat, um dieselbe Vernetzungsdichte in der ausgehärteten Zusammensetzung zu ermöglichen. Gleichzeitig wurde jedoch als Vergleich noch R8 hergestellt, dessen Zusammensetzung den ursprünglichen Polyiisocyanatgehalt der anderen Zusammensetzungen auf Basis von Polyesterpolyolen aufweist.

Die Testergebnisse der Beispielzusammensetzungen V1, V2 und R1-R8 sind in Tabellen 3 und 4 zusammengefasst. Für jede Zusammensetzung wurde jeweils ein Shore A Prüfkörper angefertigt und dieser während 14 Tagen im Normklima ("14d NK") ausgehärtet und ein erstes Mal gewogen. Dann wurde er während 24 Stunden in Testbenzin gelagert ("1d Testbenzin"), mit einem Tuch trocken gewischt und ein zweites Mal gewogen. Daraufhin wurde er während 24 Stunden an der Luft im Normklima ("1d NK") trocknen gelassen und ein drittes Mal gewogen. Die Gewichtsänderung in Prozent bezieht sich immer auf die anfängliche Masse des Prüfkörpers nach 14 Tagen NK aber vor Testbenzinlagerung.

**Tabelle 3: Resultate der Messungen zu Shore A Härte und Gewichtsveränderung der ausgehärteten Beispielzusammensetzungen nach Lagerung in Testbenzin. "n/v": Wegen Unverträglichkeit von Weichmacher und Polyol konnte keine für Testmessungen brauchbare Zusammensetzung formuliert werden.**

| *Testergebnis* | **V1** | **R1** | **R2** | **R3** | **V2** |
|---|---|---|---|---|---|
| Shore A Härte, 14d NK | 19 | 26 | 32 | n/v | 20 |
| Masse (g), 14d NK | 12.966 | 15.953 | 14.866 | n/v | 14.957 |
| Masse (g), 14d NK + 1d Testbenzin | 12.486 | 15.307 | 14.206 | n/v | 16.302 |
| Gewichtsänderung (%) | -3.7 | -4.0 | -5.7 | n/v | +8.9 |
| Masse (g), 14d NK + 1d Testbenzin + 1d NK | 12.318 | 15.107 | 13.824 | n/v | 13.788 |
| Gewichtsänderung (%) | -5.0 | -5.3 | -7.0 | n/v | -7.9 |

**Tabelle 4: Resultate der Messungen zu Shore A Härte und Gewichtsveränderung der ausgehärteten Beispielzusammensetzungen nach Lagerung in Testbenzin. "n/v": Wegen Untervernetzung konnte keine für Testmessungen brauchbare ausgehärtete Zusammensetzung hergestellt werden.**

| *Testergebnis* | **R4** | **R5** | **R6** | **R7** | **R8** |
|---|---|---|---|---|---|
| Shore A Härte, 14d NK | 31 | 36 | 41 | 21 | n/v |
| Masse (g), 14d NK | 12.44 | 16.192 | 14.478 | 14.675 | n/v |
| Masse (g), 14d NK + 1d Testbenzin | 13.392 | 17.653 | 15.461 | 13.621 | n/v |
| Gewichtsänderung (%) | +7.7 | +9.0 | +6.9 | -7.2 | n/v |
| Masse (g), 14d NK + 1d Testbenzin + 1d NK | 11.068 | 14.454 | 12.271 | 13.399 | n/v |
| Gewichtsänderung (%) | -11.0 | -10.7 | -15.2 | -8.7 | n/v |

Die Ergebnisse aus Tabellen 3 und 4 zeigen, dass das erfindungsgemässe Beispiel V1 mit 5% Gewichtsverlust nach Kraftstofflagerung die kleinste Weichmacherauswaschung aller geprüften Zusammensetzungen auf Basis von Polyesterpolyolen (V1, R1-R3, R7-R8) aufweist. Vergleichsbeispiel R3 konnte nicht gemessen werden, da der benutzte Weichmacher **W** mit dem verwendeten Polyol **P** nicht genügend mischbar ist und deshalb keine Zusammensetzung formuliert werden konnte. R8 konnte nicht gemessen werden, da der verwendete Weichmacher über dessen Hydroxylgruppen teilweise mit dem Polyisocyanat I reagiert hatte und dadurch die Vernetzungsdichte in der ausgehärteten Zusammensetzung zu niedrig war, so dass es bei der Aushärtung nicht genügend Festigkeit und Elastizität aufbaute. R1 entspricht derselben Zusammensetzung, jedoch mit erhöhtem Polyisocyanatgehalt, um den Weichmacher zu kompensieren. Bei R7 handelt es sich ebenfalls um ein zusätzliches Vergleichsexperiment, in diesem Fall mit mehr Weichmacher **W,** um die gleiche Shore A Härte zu erreichen wie im erfindungsgemässen Beispiel V1, da der in R7 verwendete Weichmacher eine schlechtere Weichmacherwirkung aufweist. R7 ist ein Vergleichsexperiment zu R2, welches die ursprüngliche Weichmachermenge enthält, aber eine deutlich höhere Shore A Härte aufweist.

Die Messungen der Shore A Härte zeigen allgemein, dass die erfindungsgemässen Beispiele bei Verwendung der gleichen Weichmachermenge deutlich weichere Zusammensetzungen lieferten, was für einen Dichtstoff vorteilhaft ist. Somit ist die Weichmacherwirkung des erfindungsgemässen Weichmachers, wenn er in gleichen Anteilen eingesetzt wird, im Vergleich zu den nicht erfindungsgemässen Weichmachern bei beiden untersuchten Polyoltypen am besten.

Bezüglich Gewichtszunahme nach Testbenzinlagerung zeigt sich, dass bei Verwendung eines Polyesterpolyols unabhängig vom Weichmacher keine wesentliche Kraftstoffaufnahme erfolgt, da keine Massenzunahme beobachtet wird. Das erfindungsgemässe Beispiel V1 zeigt jedoch die geringste Auswaschung von Weichmacher, sowohl direkt nach Testbenzinlagerung als auch nach anschliessender Trocknung.

Bei den Beispielen mit Polyetherpolyolen wird in allen Fällen eine Quellung mit Massenzunahme nach Benzinlagerung beobachtet. Nach Trocknen jedoch zeigt das erfindungsgemässe Beispiel V2 deutlich den geringsten Massenverlust aller auf Polyetherpolyol basierenden Zusammensetzungen, und damit auch von allen Beispielen das reversibelste Quellverhalten.

### Herstellung und Messung der Zusammensetzungen V3 und R9 bis R11 (einkomponentig)

Es wurden eine erfindungsgemässe (V3) sowie 3 Referenzzusammensetzungen (R9 bis R11) gemäss den in der Tabelle 5 angegebenen Massen (in g) hergestellt.

Dazu wurde zunächst ein Polymer **PR** hergestellt nach folgender Methode:
500 g Polyoxypropylen-Diol (Acclaim^{®} 4200 N, Covestro; OH-Zahl 28.1 mg KOH/g), 2000 g Polyoxypropylenpolyoxyethylen-Triol (Caradol^{®} MD34-02, Shell; OH-Zahl 35.0 mg KOH/g) und 245 g Toluylendiisocyanat (TDI; Desmodur^{®} T 80 P, Covestro) wurden bei 80 °C zu einem NCO-terminierten Polyurethanpolymer **PR** mit einem titrimetrisch bestimmten Gehalt an freien Isocyanat-Gruppen von 1.88 Gew.-% umgesetzt. Dieses entspricht dem Reaktionsprodukt aus dem Polyol **P** und dem Polyisocyanat **I** der erfindungsgemässen Zusammensetzung. Die übrigen verwendeten Rohstoffe entsprechen denen die in Tabelle 1 aufgeführt sind.

Darauf wurde in einem Vakuummischer jeweils das Polyurethanpolymer **PR** zusammen mit dem Weichmacher **W** unter Stickstoff vorgelegt, der Füllstoff **F** zugegeben und eingemischt. Daraufhin wurde der Katalysator zugegeben und während 20 min bei 1000-1200 Umdrehungen unter Vakuum eingemischt, wobei eine homogene Paste erhalten wurde. Diese wurde dann verwendet, um die Prüfkörper herzustellen.

**Tabelle 5: Beispielzusammensetzungen mit Bestandteilen in g. V3 ist erfindungsgemäss, R9 bis R11 sind nicht erfindungsgemäss.**

| *Bestandteile in [g]* | **V3** | **R9** | **R10** | **R11** |
|---|---|---|---|---|
| Polymer **PR** | 20 | 20 | 20 | 20 |
| Proviplast 024 | 24.95 | - | - | - |
| Freeflex DEPG | - | 24.95 | - | - |
| Disflamoll DPK | - | - | 24.95 | - |
| DIDP | - | - | - | 24.95 |
| Omyacarb 5GU | 55 | 55 | 55 | 55 |
| Metatin 712 | 0.05 | 0.05 | 0.05 | 0.05 |

Die Testergebnisse der Beispielzusammensetzungen V3 und R9-R11 sind in Tabelle 6 zusammengefasst. Für jede Zusammensetzung wurde der jeweilige Shore A Prüfkörper für die Gewichtsmessungen nach 14 Tagen NK, nach einem Tag Testbenzinlagerung, sowie nach einem Tag Trocknen nach der Testbenzinlagerung verwendet. Die Gewichtsänderung in Prozent bezieht sich immer auf die anfängliche Masse des Prüfkörpers nach 14 Tagen NK aber vor Testbenzinlagerung. Zusätzlich dazu wurde das Volumen (beziehungsweise der Durchmesser und die Dicke) des Shore A Prüfkörpers nach 14 Tagen NK sowie nach einem Tag Trocknen nach der Testbenzinlagerung gemessen, um den Schrumpf durch Weichmacherauswaschung festzustellen. Gleichzeitig wurde an denselben Shore A Prüfkörpern die Shore A Härte nach 14 Tagen NK sowie nach einem Tag Trocknen nach der Testbenzinlagerung gemessen.

**Tabelle 6: Resultate der Messungen zu Shore A Härte und Gewichtsveränderung der ausgehärteten Beispielzusammensetzungen nach Lagerung in Testbenzin. "n/v": Wegen Untervernetzung konnte keine für Testmessungen brauchbare ausgehärtete Zusammensetzung hergestellt werden.**

| *Testergebnis* | **V3** | **R9** | **R10** | **R11** |
|---|---|---|---|---|
| Shore A Härte, 14d NK | 23 | n/v | 35 | 31 |
| Shore A Härte, 14d NK + 1d Testbenzin + 1d NK | 24 | n/v | 43 | 50 |
| Masse (g), 14d NK | 13.009 | n/v | 13.743 | 12.701 |
| Masse (g), 14d NK + 1d Testbenzin | 14.657 | n/v | 15.396 | 14.038 |
| Gewichtsänderung (%) | 12.7 | n/v | 12.0 | 10.5 |
| Masse (g), 14d NK + 1d Testbenzin + 1d NK | 12.184 | n/v | 11.993 | 10.566 |
| Gewichtsänderung (%) | -6.3 | n/v | -12.7 | -16.8 |
| Durchmesser (mm) / Dicke (mm), 14d NK | 42/6 | n/v | 42/6 | 42/6 |
| Durchmesser (mm) / Dicke (mm), 14d NK + 1d Testbenzin + 1d NK | 41 / 5.9 | n/v | 39.5/5.7 | 37.5/5.4 |

Die Ergebnisse in Tabelle 6 zeigen deutlich, dass die erfindungsgemässe Zusammensetzung V3 am wenigsten Weichmacherauswaschung erleidet. Sowohl die Massenänderung nach Testbenzinlagerung und Trocknung als auch die Volumenänderung und die Änderung der Shore A Härte sind bei V3 deutlich geringer als bei den Vergleichsbeispielen. Zwar liegt in allen Beispielen eine Quellung nach Testbenzinlagerung vor, allerdings ist diese weitestgehend reversibel, wie die Messdaten nach Trocknung zeigen. Bei den nicht erfindungsgemässen Versuchen liegt ein wesentlich höherer Schrumpf und eine signifikant höhere Gewichtsabnahme bedingt durch die erhebliche Weichmacherauswaschung vor.

Zusammenfassend wurde gezeigt, dass erfindungsgemässe Zusammensetzungen auf Basis von Polyesterpolyolen wesentlich kraftstoffbeständiger sind als nicht erfindungsgmässe und weder quellen noch wesentlichen Weichmacherverslust erleiden. Erfindungsgemässe Zusammensetzungen auf Basis von Polyetherpolyolen quellen zwar, was je nach Anwendung vorteilhaft sein kann, die Quellung ist jedoch im Gegensatz zu nicht erfindungsgemässen Zusammensetzungen weitgehend reversibel und geht nicht mit wesentlichem Weichmacherverlust einher.

## Patentansprüche

1. Polyurethanzusammensetzung, umfassend
a) 5 bis 40 Gew.-%, bezogen auf die gesamte Polyurethanzusammensetzung, mindestens eines Polyols **P;**
b) 25 bis 75 Gew.-%, bezogen auf die gesamte Polyurethanzusammensetzung, mindestens eines Füllstoffs **F;**
c) 0.5 bis 10 Gew.-%, bezogen auf die gesamte Polyurethanzusammensetzung, mindestens eines Polyisocyanats **I;**
d) 10 bis 40 Gew.-%, bezogen auf die gesamte Polyurethanzusammensetzung, mindestens eines Weichmachers **W;**
**dadurch gekennzeichnet, dass** der Weichmacher **W** mindestens ein Sulfonamid umfasst.

2. Polyurethanzusammensetzung nach Anspruch 1, **dadurch gekennzeichnet, dass** die Zusammensetzung im Wesentlichen frei ist von Asphalt, Bitumen oder Teerölen.

3. Polyurethanzusammensetzung nach einem der Ansprüche 1 oder 2, **dadurch gekennzeichnet, dass** der Weichmacher **W** N-Butylbenzolsulfonamid umfasst oder daraus besteht.

4. Polyurethanzusammensetzung nach einem der Ansprüche 1 bis 3, **dadurch gekennzeichnet, dass** das Polyol **P** mindestens ein Polyetherpolyol umfasst oder daraus besteht.

5. Polyurethanzusammensetzung nach einem der Ansprüche 1 bis 3, **dadurch gekennzeichnet, dass** das Polyol P mindestens ein Polyesterpolyol umfasst oder daraus besteht.

6. Polyurethanzusammensetzung nach einem der Ansprüche 1 bis 5, **dadurch gekennzeichnet, dass** das Polyisocyanat I monomeres, oligomeres und/oder polymeres Diphenylmethandiisocyanat (MDI) oder Toluylendiisocyanat (TDI) umfasst.

7. Polyurethanzusammensetzung nach einem der Ansprüche 1 bis 6, **dadurch gekennzeichnet, dass** die Zusammensetzung eine einzelne Komponente umfasst, umfassend:
a) 5.5 bis 50 Gew.-%, bezogen auf die gesamte Zusammensetzung, mindestens eines isocyanatfunktionellen Polyurethanpolymers **PR,** erhalten aus dem mindestens einen Polyol **P** und dem mindestens einen Polyisocyanat **I;**
b) 10 bis 40 Gew.-%, bezogen auf die gesamte Zusammensetzung, des mindestens einen Weichmachers **W;**
c) 25 bis 75 Gew.-%, bezogen auf die gesamte Polyurethanzusammensetzung, des mindestens einen Füllstoffs **F;** sowie
d) 0 bis 2 Gew.-%, bevorzugt 0.01 bis 1 Gew.-%, bezogen auf die gesamte Polyurethanzusammensetzung, mindestens eines Katalysators für die Vernetzung von Polyurethanen.

8. Polyurethanzusammensetzung nach einem der Ansprüche 1 bis 6, **dadurch gekennzeichnet, dass** die Zusammensetzung zwei Komponenten **KA** und **KB** umfasst, wobei die erste Komponente **KA** das mindestens eine Polyol **P** umfasst und die zweite Komponente **KB** das mindestens eine Polyisocyanat **I** umfasst.

9. Polyurethanzusammensetzung nach Anspruch 8, umfassend:
- eine erste Komponente **KA,** umfassend
a) 10 bis 50 Gew.-%, bezogen auf **KA,** des mindestens einen Polyols **P;**
b) 10 bis 50 Gew.-%, bezogen auf **KA,** des mindestens einen Weichmachers **W;**
c) 25 bis 75 Gew.-%, bezogen auf **KA,** des mindestens einen Füllstoffs **F;**
d) 0 bis 2 Gew.-%, bevorzugt 0.01 bis 1 Gew.-%, bezogen auf **KA,** mindestens eines Katalysators für die Vernetzung von Polyurethanen; sowie
- eine zweite Komponente **KB,** umfassend
e) 10 bis 100 Gew.-%, bezogen auf **KB,** des mindestens einen Polyisocyanats **I;**
f) 0 bis 60 Gew.-%, bezogen auf **KB,** des mindestens einen Weichmachers **W;**
g) 0 bis 60 Gew.-%, bezogen auf **KB**,des mindestens einen Füllstoffs **F;**
wobei das Massenmischverhältnis der beiden Komponenten **KA:KB** bevorzugt zwischen 8:1 und 12:1 liegt.

10. Verwendung einer Polyurethanzusammensetzung nach einem der Ansprüche 1 bis 9 als Kleb- oder Dichtstoff, bevorzugt als Fugendichtstoff.

11. Verwendung nach Anspruch 10, **dadurch gekennzeichnet, dass** das Substrat zum Verkleben und/oder Abdichten Beton umfasst.

12. Verwendung nach Anspruch 10 oder 11, **dadurch gekennzeichnet, dass** das zu verklebende oder abzudichtende Substrat eine Garage oder ein Bauwerk einer Tankstelle, eines Tanklagers, eines Kraftstoffbehälters oder eines Flugplatzes umfasst.

13. Verwendung nach Anspruch 10 oder 11 als Dichtstoff für Bodenfugen im Tiefbau.

14. Bauwerk oder Fertigungsgegenstand, insbesondere umfassend Beton, das mit einer Polyurethanzusammensetzung gemäss einem der Ansprüche 1 bis 9 verklebt oder abgedichtet wurde.

15. Ausgehärtete Polyurethanzusammensetzung nach einem der Ansprüche 1 bis 9.

## Claims

1. Polyurethane composition comprising
a) 5 to 40 wt%, based on the overall polyurethane composition, of at least one polyol **P;**
b) 25 to 75 wt%, based on the overall polyurethane composition, of at least one filler **F;**
c) 0.5 to 10 wt%, based on the overall polyurethane composition, of at least one polyisocyanate **I;**
d) 10 to 40 wt%, based on the overall polyurethane composition, of at least one plasticizer **W;**
**characterized in that** the plasticizer **W** comprises at least one sulfonamide.

2. Polyurethane composition according to Claim 1, **characterized in that** the composition is substantially free from asphalt, bitumen, or tar oils.

3. Polyurethane composition according to either of Claims 1 and 2, **characterized in that** the plasticizer **W** comprises or consists of N-butylbenzenesulfonamide.

4. Polyurethane composition according to any of Claims 1 to 3, **characterized in that** the polyol **P** comprises or consists of at least one polyether polyol.

5. Polyurethane composition according to any of Claims 1 to 3, **characterized in that** the polyol **P** comprises or consists of at least one polyester polyol.

6. Polyurethane composition according to any of Claims 1 to 5, **characterized in that** the polyisocyanate **I** comprises monomeric, oligomeric and/or polymeric diphenylmethane diisocyanate (MDI) or tolylene diisocyanate (TDI).

7. Polyurethane composition according to any of Claims 1 to 6, **characterized in that** the composition comprises a single component, comprising:
a) 5.5 to 50 wt%, based on the overall composition, of at least one isocyanate-functional polyurethane polymer **PR,** obtained from the at least one polyol **P** and the at least one polyisocyanate **I;**
b) 10 to 40 wt%, based on the overall composition, of the at least one plasticizer **W;**
c) 25 to 75 wt%, based on the overall polyurethane composition, of the at least one filler **F**; and
d) 0 to 2 wt%, preferably 0.01 to 1 wt%, based on the overall polyurethane composition, of at least one catalyst for the crosslinking of polyurethanes.

8. Polyurethane composition according to any of Claims 1 to 6, **characterized in that** the composition comprises two components **KA** and **KB,** with the first component **KA** comprising the at least one polyol **P,** and the second component **KB** comprising the at least one polyisocyanate **I.**

9. Polyurethane composition according to Claim 8, comprising:
- a first component **KA,** comprising
a) 10 to 50 wt%, based on **KA,** of the at least one polyol **P;**
b) 10 to 50 wt%, based on **KA,** of the at least one plasticizer **W;**
c) 25 to 75 wt%, based on **KA,** of the at least one filler **F;**
d) 0 to 2 wt%, preferably 0.01 to 1 wt%, based on **KA,** of at least one catalyst for the crosslinking of polyurethanes; and
- a second component **KB,** comprising
e) 10 to 100 wt%, based on **KB,** of the at least one polyisocyanate **I;**
f) 0 to 60 wt%, based on **KB,** of the at least one plasticizer **W;**
g) 0 to 60 wt%, based on **KB,** of the at least one filler **F;**
with the mass mixing ratio of the two components **KA:KB** being preferably between 8:1 and 12:1.

10. Use of a polyurethane composition according to any of Claims 1 to 9 as adhesive or sealant, preferably as joint sealant.

11. Use according to Claim 10, **characterized in that** the substrate for bonding and/or sealing comprises concrete.

12. Use according to Claim 10 or 11, **characterized in that** the substrate for bonding or sealing comprises a garage or a building of a filling station, of a tank farm, of a fuel container, or of an airport.

13. Use according to Claim 10 or 11 as sealant for ground joints in civil engineering.

14. Building or article of manufacture, especially comprising concrete, which has been bonded or sealed with a polyurethane composition according to any of Claims 1 to 9.

15. Cured polyurethane composition according to any of Claims 1 to 9.

## Revendications

1. Composition de polyuréthane, comprenant
a) 5 à 40% en poids, par rapport à la composition totale de polyuréthane, d'au moins un polyol P ;
b) 25 à 75% en poids, par rapport à la composition totale de polyuréthane, d'au moins une charge F ;
c) 0,5 à 10% en poids, par rapport à la composition totale de polyuréthane, d'au moins un polyisocyanate I ;
d) 10 à 40% en poids, par rapport à la composition totale de polyuréthane, d'au moins un plastifiant W ;
**caractérisée en ce que** le plastifiant W comprend au moins un sulfonamide.

2. Composition de polyuréthane selon la revendication 1, **caractérisée en ce que** la composition est essentiellement exempte d'asphalte, de bitume ou d'huiles de goudron.

3. Composition de polyuréthane selon l'une quelconque des revendications 1 ou 2, **caractérisée en ce que** le plastifiant W comprend du N-butylbenzènesulfonamide ou est constitué par celui-ci.

4. Composition de polyuréthane selon l'une quelconque des revendications 1 à 3, **caractérisée en ce que** le polyol P comprend au moins un polyétherpolyol ou est constitué par celui-ci.

5. Composition de polyuréthane selon l'une quelconque des revendications 1 à 3, **caractérisée en ce que** le polyol P comprend au moins un polyesterpolyol ou est constitué par celui-ci.

6. Composition de polyuréthane selon l'une quelconque des revendications 1 à 5, **caractérisée en ce que** le polyisocyanate I comprend du diisocyanate de diphénylméthane (MDI) ou du diisocyanate de toluylène (TDI) monomère, oligomère et/ou polymère.

7. Composition de polyuréthane selon l'une quelconque des revendications 1 à 6, **caractérisée en ce que** la composition comprend un seul composant, comprenant :
a) 5,5 à 50% en poids, par rapport à la composition totale, d'au moins un polymère de polyuréthane PR à fonctionnalité isocyanate, obtenu à partir dudit au moins un polyol P et dudit au moins un polyisocyanate I ;
b) 10 à 40% en poids, par rapport à la composition totale, dudit au moins un plastifiant W ;
c) 25 à 75% en poids, par rapport à la composition totale de polyuréthane, de ladite au moins une charge F ; ainsi que
d) 0 à 2% en poids, de préférence 0,01 à 1% en poids, par rapport à la composition totale de polyuréthane, d'au moins un catalyseur pour la réticulation de polyuréthanes.

8. Composition de polyuréthane selon l'une quelconque des revendications 1 à 6, **caractérisée en ce que** la composition comprend deux composants KA et KB, le premier composant KA comprenant ledit au moins un polyol P et le deuxième composant KB comprenant ledit au moins un polyisocyanate I.

9. Composition de polyuréthane selon la revendication 8, comprenant :
- un premier composant KA, comprenant
a) 10 à 50% en poids, par rapport à KA, dudit au moins un polyol P ;
b) 10 à 50% en poids, par rapport à KA, dudit au moins un plastifiant W ;
c) 25 à 75% en poids, par rapport à KA, de ladite au moins une charge F ;
d) 0 à 2% en poids, de préférence 0,01 à 1% en poids, par rapport à KA, d'au moins un catalyseur pour la réticulation de polyuréthanes ; ainsi que
- un deuxième composant KB, comprenant
e) 10 à 100% en poids, par rapport à KB, dudit au moins un polyisocyanate I ;
f) 0 à 60% en poids, par rapport à KB, dudit au moins un plastifiant W ;
g) 0 à 60% en poids, par rapport à KB, de ladite au moins une charge F ;
le rapport massique de mélange des deux composants KA:KB étant de préférence situé entre 8:1 et 12:1.

10. Utilisation d'une composition de polyuréthane selon au moins l'une quelconque des revendications 1 à 9, comme adhésif ou matériau de bouchage, de préférence comme matériau de bouchage de joints.

11. Utilisation selon la revendication 10, **caractérisée en ce que** le substrat à coller et/ou à boucher comprend du béton.

12. Utilisation selon la revendication 10 ou 11, **caractérisée en ce que** le substrat à coller ou à boucher comprend un garage ou une construction d'une station-service, d'un terminal de stockage, d'un réservoir à carburant ou d'un aérodrome.

13. Utilisation selon la revendication 10 ou 11 comme matériau de bouchage pour des joints de sol dans le génie civil.

14. Construction ou article de fabrication, comprenant en particulier du béton, qui a été collé ou bouché par une composition de polyuréthane selon l'une quelconque des revendications 1 à 9.

15. Composition durcie de polyuréthane selon l'une quelconque des revendications 1 à 9.
